# EUROPEAN PATENT SPECIFICATION

(11) **EP 4 040 836 B1**
(45) Date of publication and mention of the grant of the patent: **18.09.2024**
(21) Application number: 19951484.5
(22) Date of filing: 07.11.2019
(51) Int. Cl.: H04W 36/00, H04W 24/02

(54) **COMMUNICATION METHOD AND COMMUNICATION APPARATUS**
KOMMUNIKATIONSVERFAHREN UND KOMMUNIKATIONSVORRICHTUNG
PROCÉDÉ ET APPAREIL DE COMMUNICATION

(43) Date of publication of application: 10.08.2022
(73) Proprietor: Huawei Technologies Co., Ltd., Longgang Shenzhen, Guangdong 518129 (CN)
(72) Inventor: LI, Bingzhao, Shenzhen, Guangdong 518129 (CN); JIANG, Senlei, Shenzhen, Guangdong 518129 (CN); DU, Jun, Shenzhen, Guangdong 518129 (CN)
(74) Representative: Thun, Clemens
(86) International application number: PCT/CN2019/116383
(87) International publication number: WO 2021/087901

(56) References cited:
- EP-A1- 3 780 695
- WO-A1-2018/121203
- WO-A1-2019/196098
- CN-A- 103 858 482
- CN-A- 110 312 268
- CN-A- 110 312 268
- CN-A- 110 351 792
- US-A1- 2019 141 592
- US-A1- 2019 215 861
- ERICSSON: "ANR for NSA NR", vol. RAN WG2, no. Qingdao, China; 20170627 - 20170629, 16 June 2017 (2017-06-16), XP051306913, Retrieved from the Internet <URL:http://www.3gpp.org/ftp/tsg_ran/WG2_RL2/TSGR2_AHs/2017_06_NR/Docs/> [retrieved on 20170616]
- OPPO: "Further Considerations on ANR Functionality for eLTE Considering Different TAC Formats", vol. RAN WG2, no. Busan, Korea; 20180521 - 20180525, 20 May 2018 (2018-05-20), XP051443172, Retrieved from the Internet <URL:http://www.3gpp.org/ftp/Meetings%5F3GPP%5FSYNC/RAN2/Docs/> [retrieved on 20180520]

## Description

### TECHNICAL FIELD

This application relates to the communications field, and more specifically, to communication methods, a terminal device and a first access network device.

### BACKGROUND

Long term evolution (long term evolution, LTE) provides an automatic neighbor relation (automatic neighbor relation, ANR) function for neighboring cells based on a self-organizing network (self-organizing network, SON) system. An important aspect of the ANR function is to find a new cell and attempt to add the cell as a neighboring cell, so as to use the cell as a potential target for subsequent handover.

In a current reporting process of ANR measurement, a terminal device reports a cell global identifier (cell global identifier, CGI) corresponding to a physical cell identifier (physical cell identifier, PCI) to an access network device (referred to as a first access network device below). After receiving the CGI, the first access network device initiates an Xn (for example, X2) connection establishment request to an access network device corresponding to the CGI (referred to as a second access network device below), to establish an Xn connection to the second access network device. In a process of establishing the Xn connection, the second access network device sends information such as a bandwidth and a subcarrier spacing (subcarrier spacing, SCS) that correspond to the cell to the first access network device. The first access network device may subsequently perform handover based on the information.

Currently, there is a scenario in which the access network device does not support an Xn interface. In this case, the first access network device needs to initiate handover to the second access network device by using a core network device. Because the first access network device cannot obtain related information required for handover from the second access network device through the Xn interface, the first access network device cannot perform handover.

### AMENDED DESCRIPTION

The document US 2019/0141592 A1 shows a communication system with a beam-based connection failure report signaling.

The document US 2019/0215861 A1 shows a method and apparatus for receiving and transmitting data in a mobile communication system. Especially, configuring a connection between a terminal and a base station is shown

### SUMMARY

The present invention is defined by the independent claims. Further advantageous developments are shown by the dependent claims.

### BRIEF DESCRIPTION OF DRAWINGS

FIG. 1 is a schematic diagram of an architecture of a communications system applied to this application;
FIG. 2 shows a process in which a terminal device obtains a CGI of a cell B;
FIG. 3 is a schematic flowchart of a communication method according to the claimed invention,
FIG. 4 is a schematic block diagram of a communications apparatus according to this application;
FIG. 5 is a schematic diagram of a structure of a terminal device according to this application; and
FIG. 6 is a schematic block diagram of another apparatus according to this application.

### DESCRIPTION OF EMBODIMENTS

The following describes technical solutions in this application with reference to the accompanying drawings. For example, features or content marked by dashed lines in the accompanying drawings in embodiments of this application may be understood as optional operations or optional structures of embodiments.

The technical solutions in embodiments of this application can be applied to various communications systems, for example, a long term evolution (long term evolution, LTE) system, an LTE frequency division duplex (frequency division duplex, FDD) system, an LTE time division duplex (time division duplex, TDD) system, a fifth generation (5th generation, 5G) system, new radio (new radio, NR), or another communications system in the future.

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communications device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

An access network device is a device that communicates with the terminal device. The access network device may be a base station (base station), an evolved NodeB (evolved NodeB, eNodeB), a transmission reception point (transmission reception point, TRP), a next generation NodeB (next generation NodeB, gNB) in a 5G mobile communications system, a base station in a future mobile communications system, an access node in a Wi-Fi system, and the like, or may be a module or a unit that performs some functions of a base station, for example, may be a central unit (central unit, CU) or a distributed unit (distributed unit, DU). A specific technology and a specific device form used for the access network device are not limited in embodiments of this application.

In different systems, a core network device corresponds to different devices. For example, in a 4G network, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), a user plane function (user plane function, UPF), or the like.

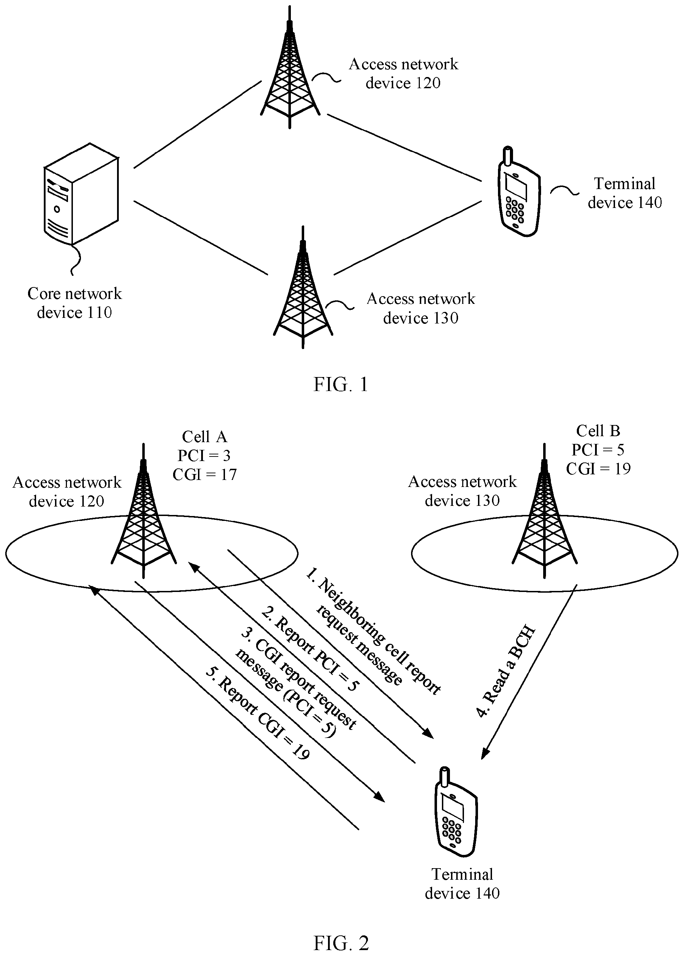

FIG. 1 is a schematic diagram of an architecture of a communications system applied to this application. As shown in FIG. 1, the mobile communications system includes a core network device 110, at least two access network devices (for example, an access network device 120 and an access network device 130 in FIG. 1), and at least one terminal device (for example, a terminal device 140 in FIG. 1). The terminal device accesses the access network device in a wireless manner. The access network device does not support an Xn interface. The access network device and the core network device may communicate with each other through an NG interface. The core network device and the access network device may be two different physical devices that are independent of each other, or functions of the core network device and logical functions of the access network device may be integrated into a same physical device, or some functions of the core network device and some functions of the access network device may be integrated into one physical device. The terminal device may be fixed or removable. FIG. 1 is merely a schematic diagram. The communications system may further include another network device, for example, may further include a wireless relay device and a wireless backhaul device, which are not shown in FIG. 1. Quantities of core network devices, access network devices, and terminal devices included in the communications system are not limited in this embodiment of this application.

In the system shown in FIG. 1, a current serving cell of the terminal device 140 is a cell A. The cell A corresponds to the access network device 120. A physical cell identifier (physical cell identifier, PCI) of the cell A is 3, and a CGI is 17. The terminal device 140 has an ANR function. After the ANR function of the terminal device 140 is enabled, the terminal device 140 may obtain a CGI of a cell B corresponding to the access network device 130. For a specific process, refer to FIG. 2.

FIG. 2 shows a process in which the terminal device obtains the CGI of the cell B. Refer to FIG. 2. In Step 1, the access network device 120 sends a neighboring cell report request message to the terminal device 140. After receiving the request message, the terminal device 140 measures the cell B. If signal strength of the cell B meets a requirement, the terminal device 140 reports a PCI of the cell B to the access network device in Step 2, and the PCI is 5. In Step 3, the access network device sends a CGI report request message to the terminal device, where the request message carries the PCI of the cell B. After receiving the PCI of the cell B, in Step 4, the terminal device reads a broadcast channel (broadcast channel, BCH) of the cell B, to obtain the CGI corresponding to the PCI of the cell B, where the CGI is 19. Finally, in Step 5, the terminal device 130 reports the CGI of the cell B to the access network device.

If the access network devices 120 and 130 support the Xn interface, after receiving the CGI of the cell B, the access network device 120 may initiate an Xn connection establishment request to the access network device 130, to establish an Xn connection to the access network device 130. In an Xn connection establishment process, the access network device 130 may send information such as a bandwidth and an SCS that correspond to the cell B to the cell access network device 120. The cell A may be subsequently handed over based on the information. However, in the system shown in FIG. 1, at least one of the access network devices 120 and 130 does not support the Xn interface. Therefore, the access network device 120 needs to initiate handover to the access network device 130 by using the core network device 110. Because the access network device 120 cannot obtain, through the Xn interface, the bandwidth, the SCS, and other information that are corresponding to the cell B and that are required for handover, the terminal device cannot be handed over from the cell A to the cell B.

In view of this, this application provides a communication method. In a scenario in which at least one of the access network devices 120 and 130 does not support the Xn interface, the terminal device 140 obtains the information for cell handover from the access network device 130, and the terminal device 140 provides the access network device 120 with the information for cell handover. Therefore, the access network device 120 and the core network device 110 may perform cell handover based on the information for cell handover provided by the terminal device 140.

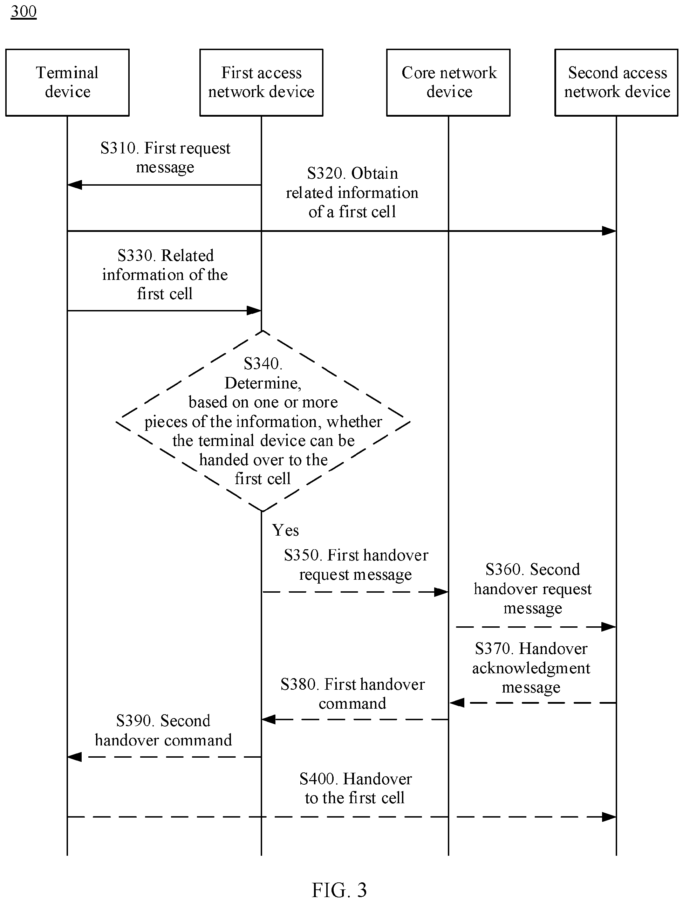

The following describes a communication method provided in this application with reference to FIG. 3.

In the embodiment shown below, interaction between a core network device, a first access network device, a second access network device, and a terminal device is used as an example to describe in detail the method provided in this embodiment of this application. However, this should not constitute any limitation on this application. For example, the terminal device shown in the following embodiments may be replaced with a component (for example, a chip, a chip system, or a circuit) disposed in the terminal device. The access network device (for example, the first access network device or the second access network device) may be replaced with a component (for example, a chip, a chip system, or a circuit) disposed in the access network device. The core network device may be replaced with a component (for example, a chip, a chip system, or a circuit) disposed in the core network device.

It should be understood that the method shown in FIG. 3 can be applied to FIG. 1 or FIG. 2. The terminal device in FIG. 3 corresponds to the terminal device 140 shown in FIG. 1. The first access network device corresponds to the access network device 120. The second access network device corresponds to the access network device 130. A first cell corresponds to the cell B. The core network device corresponds to the core network device 110.

In addition, a person skilled in the art may understand that CGIs are used to distinguish cells. Currently, there are only 512 PCIs in LTE and 1024 PCIs in NR. Therefore, different cells may use a same PCI. Usually, a PCI cannot uniquely identify a cell. Therefore, the CGIs are needed to distinguish cells. The CGI usually includes a PLMN ID and a cell identity. However, this is not limited in this application.

FIG. 3 is a schematic flowchart of a communication method according to the claimed invention. As shown in FIG. 3, the method 300 includes S310 to S330. The following describes each step in detail.

S310. The first access network device sends a first request message to the terminal device. Correspondingly, the terminal device receives the first request message.

The first request message is used to request the terminal device to report related information of the first cell, and the related information of the first cell is used by the first access network device to perform cell handover.

The first request message includes a PCI (referred to as a first PCI below) and indication information. The first PCI is used to identify the first cell, or in other words, the first PCI corresponds to the first cell. An access network device corresponding to the first cell is the second access network device. Alternatively, the PCI may be replaced with other information used to identify the first cell. This is not limited in this embodiment of this application. The indication information indicates the terminal device to report the related information of the first cell.

Specifically, only when receiving the first PCI and the indication information, the terminal device needs to obtain the related information of the first cell, for example, bandwidth information of the first cell and/or SCS information of the first cell. If the terminal device receives only the first PCI, the terminal device may not need to obtain the related information of the first cell, but obtains only information such as a CGI corresponding to the first PCI and a PLMN of the first cell based on the conventional technology (similar to Step 2 in FIG. 2).

In another implementation, the first request message only needs to include a first PCI (or the PCI may be replaced with other information used to identify the first cell, and this is not limited in this embodiment of this application), in other words, the first request message may not need to include indication information. After the terminal device receives the first request message, the terminal device may learn that the terminal device needs to obtain and report the related information of the cell corresponding to the first PCI (that is, the first cell).

Compared with the second implementation, in the first implementation, based on whether the indication information is carried, the first access network device can control the terminal device to determine whether to report the related information such as the bandwidth information of the first cell and/or the SCS information of the first cell. Therefore, when the related information such as the bandwidth information of the first cell, or the SCS information of the first cell, or both do not need to be reported (for example, the access device has the Xn interface or an X2 interface), the terminal device may not report the foregoing related information, which reduces reporting signaling overheads.

Optionally, the first request message may be a radio resource control (radio resource control, RRC) reconfiguration message. This is not limited in this application.

Optionally, before S310, the terminal device may first report the first PCI to the first access network device. This step is similar to Step 2 in FIG. 2. For details, refer to the conventional technology. Details are not described herein again.

The related information of the first cell includes the following information.
(1) Bandwidth information of the first cell and SCS information of the first cell. In other words, the related information of the first cell includes information about a bandwidth supported by the first cell and information about an SCS supported by the first cell.

The related information of the first cell includes the bandwidth information of the first cell. In this case, for example, the SCS information of the first cell may be a fixed value, for example, 30 KHz, by default. Additionally, the related information of the first cell includes the SCS information of the first cell. In this case, the bandwidth information of the first cell may be a fixed value, for example, 100 MHz, by default.

Optionally, the bandwidth information of the first cell may include downlink bandwidth information of the first cell. Correspondingly, the SCS information of the first cell may include SCS information corresponding to the downlink bandwidth information of the first cell.

Optionally, the bandwidth information of the first cell may include uplink bandwidth information of the first cell. Correspondingly, the SCS information of the first cell may include SCS information corresponding to the uplink bandwidth information of the first cell.

Optionally, the bandwidth information of the first cell may include supplementary uplink (supplementary uplink, SUL) bandwidth information of the first cell. Correspondingly, the SCS information of the first cell may include SCS information corresponding to the supplementary uplink bandwidth information of the first cell.

Optionally, the bandwidth information of the first cell may include one or more pieces of bandwidth information, and the SCS information of the first cell may include one or more pieces of SCS information. In other words, the first cell may support one or more bandwidths and one or more SCSs.

Optionally, the bandwidth information of the first cell may correspond to the SCS information of the first cell. For example, each bandwidth corresponds to an SCS.

For example, the bandwidth information of the first cell and the SCS information of the first cell may be shown in Table 1.

**Table 1**

| SCS | Bandwidth |
|---|---|
| 15 KHz | 200 PRB |
| 30 KHz | 150 PRB |
| 60 KHz | 100 PRB |

It should be understood that a bandwidth unit in Table 1 is physical resource block (physical resource block, PRB), and the bandwidth unit may be converted into kilohertz (KHz), or the like. This is not limited in this application.

The related information of the first cell may further include one or more pieces of the following information:

(2) Information about an initial BWP of the first cell

The information about the initial BWP of the first cell may include frequency domain position information of the initial BWP of the first cell, bandwidth information of the initial BWP, and/or SCS information corresponding to the bandwidth information of the initial BWP. For a specific meaning of the initial BWP, refer to the conventional technology.

(3) Boundary information of the first cell

The boundary information of the first cell is used to determine a reference boundary of the first cell.

For example, the boundary information of the first cell may include absolute frequency information of a reference resource block (resource block, RB). That is, the reference boundary of the first cell is an absolute frequency of the reference resource block. The absolute frequency information of the reference resource block is a frequency of a point A.

For another example, the boundary information of the first cell may include the absolute frequency information and offsettocarrier information of the reference resource block. The offsettocarrier information indicates an offset of the reference boundary of the first cell relative to the absolute frequency of the reference resource block.

It may be understood that a start position of the bandwidth part (bandwidth part, BWP) may be determined based on the reference boundary of the first cell. For example, the boundary of the first cell may be considered as a position of PRB 0. If the BWP starts from the tenth PRB, when the position of the PRB 0 is known, the start position of the BWP can also be determined.

(4) Information about whether access to the first cell is allowed

The information about whether access to the first cell is allowed is used to indicate whether access to the first cell is barred, or is used to indicate whether access to the first cell is allowed. For example, the information about whether access to the first cell is allowed may be cell barred (cell barred) indication information. The cell barred indication information indicates whether the cell is barred (barred) or not barred (notbarred), that is, whether access to the cell is barred or not barred. The cell barred indication information is used to bar access of a terminal device in an idle mode. If the first cell is an NSA cell, to prevent access of the terminal device, the cell barred indication information may be set to barred.

(5) Information about whether the first cell is an NSA cell

For example, the information about whether the first cell is an NSA cell may be specifically the foregoing cell barred indication information. As described above, if the first cell is an NSA cell, to prevent access of the terminal device, the cell barred indication information may be set to barred. Therefore, whether the first cell is an NSA cell may be determined based on the cell barred indication information.

For another example, an NSA cell may have a dedicated identity bit. The identity bit may be, for example, one bit (bit). If the bit is 1, it indicates that the first cell is an NSA cell. If the bit is 0, it indicates that the first cell is not an NSA cell. Alternatively, meanings of 0 and 1 may be opposite.

(6) A cell identity of the first cell

The cell identity of the first cell may be a cell identity or a CGI. As described above, the CGI usually includes a PLMN ID and a cell identity. The cell identity may include an identity of the access network device to which the first cell belongs (namely, the second access network device) and an identity of a cell in the second access network device. It should be understood that the identity of the cell in the second access network device is different from the CGI and the cell identity.

(7) PLMN information of the first cell

The PLMN information of the first cell may be used by the core network device to find the second access network device.

(8) TAC information of the first cell

The TAC information of the first cell may be used by the core network device to find the second access network device.

(9) Information about bits occupied by an identity of the second access network device in the cell identity of the first cell

The bit information is a bit position occupied by the identity of the second access network device in the cell identity of the first cell, that is, the bit information indicates which bits in the cell identity of the first cell indicate the identity of the second access network device.

For example, the identity of the second access network device occupies 15 bits. If the cell identity of the first cell has 36 bits, most significant 15 bits of the cell identity of the first cell are the identity of the second access network device, and least significant 11 bits are the cell identity of the first cell.

(10) Information about whether the first cell is suitable for access

The information about whether the first cell is suitable for access may include information about whether the terminal device supports access to the first cell, or information that the terminal device does not support access to the first cell. For example, after the terminal device reads the related information of the first cell, for example, the bandwidth information of the first cell and/or the SCS information of the first cell, the terminal device determines whether the terminal device supports the bandwidth and/or the SCS; generates, based on a result of determining, the information about whether the first cell is suitable for access; and reports the information to the access network device. In this manner, the terminal device does not need to report the related information of the first cell, but directly notifies the first access network device of the information about whether the first cell is suitable for access. The first access network device may determine, based on the result of determining, whether handover is required.

S320. The terminal device obtains the related information of the first cell based on the first request message.

Optionally, the terminal device may obtain the related information of the first cell by reading a system broadcast message of the first cell. That is, the system broadcast message of the first cell may include the related information of the first cell.

For example, the system broadcast message may be sent periodically (or not in an on-demand manner), or the system broadcast message may be sent by the second access network device based on a request of the terminal device (or in an on-demand manner). For example, before the terminal device reads the system broadcast message of the first cell, the terminal device may send a second request message to the second access network device based on the first request message, where the second request message is used to request the second access network device to send the system broadcast message. After receiving the second request message, the second access network device may send the system broadcast message.

For example, a system information block (system information block, SIB) 1 in the system broadcast message may include one or more of the following: the bandwidth information of the first cell, the SCS information of the first cell, the cell identity of the first cell, the information about whether the first cell is an NSA cell, or the information about bits occupied by the identity of the second access network device in the cell identity of the first cell.

For example, a master information block (master information block, MIB) in the system broadcast message may include one or more of the following: the information about whether access to the first cell is allowed, or the information about whether the first cell is an NSA cell.

For example, the MIB may include information required for reading the SIB 1 (for example, bandwidth information).

S330. The terminal device sends the related information of the first cell to the first access network device. Correspondingly, the first access network device receives the related information of the first cell sent by the terminal device.

For example, the related information of the first cell may be sent in a form of a measurement report (measurement report, MR), may be sent in a form of a random access (RACH) report, or may be sent in a form of a connection failure report (for example, connectionestablishreport or connestfailreport), or may be sent in a form of a radio link failure report, or may be sent in a form of a log measurement report, or may be sent in a form of a mobility history report, or may be sent by using a newly defined message as a new report. For example, the related information of the first cell may be sent by using any one of an RRC message, a medium access control (Medium Access Control, MAC) control message, a physical layer message, or a newly defined message.

After receiving the related information of the first cell, the first access network device may perform cell handover based on the related information of the first cell.

Therefore, according to the method provided in this application, in a scenario in which the first access network device and the second access network device cannot communicate with each other, the terminal device obtains the related information of the first cell corresponding to the second access network device, and provides the related information of the first cell for the first access network device, so that the first access network device can perform cell handover based on the related information of the first cell.

Optionally, the method 300 may further include one or more steps in S340 to S400.

S340. The first access network device determines, based on one or more pieces of the related information of the first cell, whether the terminal device can be handed over to the first cell.

For example, if the information about whether access to the first cell is allowed indicates that access to the first cell is barred, or if the first cell is an NSA cell, the first access network device determines that the terminal device cannot be handed over to the first cell.

For another example, the first access network device determines, based on the bandwidth and the SCS that are supported by the terminal device and the bandwidth and the SCS that are supported by the first cell, whether the terminal device can be handed over to the first cell. For example, if the bandwidth supported by the first cell is 30 M, and the SCS is 30 K, and the bandwidth supported by the terminal device is 40 M, and the SCS is 30 K, the first access network device determines that the terminal device cannot be handed over to the first cell.

In an example, the first access network device determines, based on the information about the initial BWP, whether the terminal device supports access to the initial BWP. If the terminal device does not support access to the initial BWP, the terminal device cannot be handed over to the first cell. Specifically, it may be determined whether the terminal device supports the SCS information corresponding to the initial BWP. If the terminal device does not support the SCS information corresponding to the initial BWP, the terminal device cannot be handed over to the first cell.

Optionally, the first access network device determines the initial BWP based on the boundary information of the first cell and the information about the initial BWP.

In an example, if access to the first cell is allowed or the first cell is not an NSA cell, and the bandwidth and the SCS that are supported by the first cell match the bandwidth and the SCS that are supported by the terminal device, the first access network device determines that the terminal device can access the first cell. The bandwidth and the SCS that are supported by the first cell matching the bandwidth and the SCS that are supported by the terminal device may be, for example, the bandwidth supported by the first cell being greater than or equal to the bandwidth supported by the terminal device, and the SCS supported by the first cell being the same as the SCS supported by the terminal device.

In an example, if the information about whether the first cell is suitable for access is that the terminal device does not support access to the first cell, the first access network device determines that the terminal device cannot be handed over to the first cell.

S350. If the first access network device determines that the terminal device can be handed over to the first cell, the first access network device sends a handover request message (referred to as a first handover request message below) to the core network device, where the first handover request message is used to request to hand over the terminal device to the first cell, and the first handover request message includes the identity of the second access network device.

For example, the identity of the second access network device may be determined by the terminal device based on the identity of the first cell and the information about the bits occupied by the identity of the second access network device in the cell identity of the first cell. As described in S320, the related information of the first cell may include the information about the bits occupied by the identity of the second access network device in the cell identity of the first cell. Alternatively, the information about the bits occupied by the identity of the second access network device in the cell identity of the first cell may be specified in a protocol or preconfigured.

Optionally, the first handover request message may further include the PLMN information of the first cell and/or the TAC information of the first cell. The PLMN information of the first cell, or the TAC information of the first cell, or both are used by the core network device to find a corresponding access network device, that is, the second access network device.

S360. The core network device sends a handover request message (referred to as a second handover request message below) to the second access network device.

S370. The second access network device feeds back a handover acknowledgment message to the core network device.

After receiving the first handover request message sent by the first access network device, the core network device sends the second handover request message to the second access network device based on the identity of the second access network device, to request to hand over the terminal device to a second cell. If the second access network device allows handover, the second access network device sends the handover acknowledgment message to the core network device.

S380. The core network device sends a handover command (referred to as a first handover command below) to the first access network device.

S390. The first access network device sends a handover command (referred to as a second handover command below) to the terminal device based on the first handover command.

S400. The terminal device is handed over to the first cell based on the second handover command.

After receiving the handover acknowledgment message sent by the second access network device, the core network device sends the first handover command to the first access network device. The first access network device sends the second handover command to the terminal based on the first handover command, and the terminal device is handed over to the first cell or the second access network device based on the second handover command.

Optionally, the second handover command may be an RRC connection reconfiguration message. This is not limited in this application.

In conclusion, according to the method provided in this application, in the scenario in which the first access network device and the second access network device cannot communicate with each other, the terminal device obtains the related information of the first cell corresponding to the second access network device, and provides the related information of the first cell for the first access network device, so that the first access network device can perform, based on the related information of the first cell, cell handover that is based on a core network.

It should be understood that sequence numbers of the foregoing processes do not mean execution sequences in various embodiments of this application. The execution sequences of the processes should be determined based on functions and internal logic of the processes. Numbers or sequence numbers in the foregoing processes are merely used for differentiation for ease of description, and should not constitute any limitation on an implementation process of embodiments of this application.

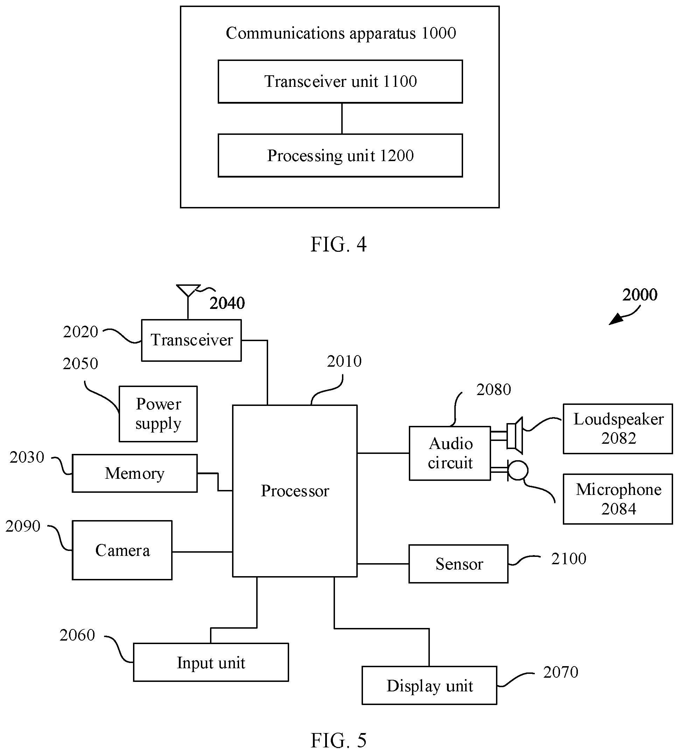

The foregoing describes in detail the method provided in this embodiment of this application with reference to FIG. 3. Apparatuses provided in embodiments of this application are described below in detail with reference to FIG. 4 to FIG. 6.

FIG. 4 is a schematic block diagram of a communications apparatus according to an embodiment of this application. As shown in FIG. 4, the communications apparatus 1000 may include a transceiver unit 1100 and a processing unit 1200.

The transceiver unit 1100 may be configured to receive information sent by another apparatus, and may be further configured to send information to another apparatus, for example, send related information of a first cell or receive the related information of the first cell. The processing unit 1200 may be configured to perform partial processing of the apparatus.

In a possible design, the communications apparatus 1000 may correspond to the terminal device in the foregoing method 300. For example, the communications apparatus 1000 may be a terminal device or a chip disposed in a terminal device. The communications apparatus 1000 may include units configured to perform operations that are performed by the terminal device in the method, and the units in the communications apparatus 1000 are separately configured to implement the operations that are performed by the terminal device in the method.

Specifically, the transceiver unit 1100 is configured to receive a first request message sent by a first access network device, where the first request message is used to request the transceiver unit to report the related information of the first cell corresponding to a physical cell identifier PCI.

The processing unit 1200 is configured to obtain the related information of the first cell based on the first request message, where the related information of the first cell includes subcarrier spacing SCS information of the first cell and bandwidth information of the first cell. The transceiver unit 1100 is further configured to send the related information of the first cell to the first access network device.

Optionally, the processing unit 1200 is specifically configured to read a system broadcast message of the first cell based on the first request message, where the system broadcast message includes the related information of the first cell.

Optionally, the transceiver unit 1100 is further configured to send a second request message to a second access network device based on the first request message, where the second access network device is an access network device corresponding to the first cell, and the second request message is used to request the second access network device to send the system broadcast message.

Optionally, the related information of the first cell further includes one or more of the following: a cell identity of the first cell, information about whether access to the first cell is allowed, information about whether the first cell is a non-access stratum NSA cell, public land mobile network PLMN information of the first cell, tracking area code TAC information of the first cell, boundary information of the first cell, or information of bits occupied by an identity of the second access network device in the cell identity of the first cell, where the second access network device is an access network device corresponding to the first cell, and the bit information is used to determine the identity of the second access network device.

Optionally, the boundary information of the first cell includes absolute frequency information of a reference resource block, or includes the absolute frequency information and offsettocarrier information of the reference resource block.

Optionally, the SCS information of the first cell corresponds to the bandwidth information of the first cell.

Optionally, the SCS information of the first cell includes one or more pieces of SCS information, and the bandwidth information of the first cell includes one or more pieces of bandwidth information.

Optionally, the transceiver unit 1100 is further configured to send the PCI to the first access network device.

It should be understood that the operations performed by the processing unit 1200 may also be performed by the transceiver unit 1100.

In another possible design, the communications apparatus 1000 may correspond to the first access network device in the method 300, for example, may be the first access network device or a chip disposed in the first access network device. The communications apparatus 1000 may include units configured to perform operations that are performed by the first access network device in the method, and the units in the communications apparatus 1000 are separately configured to implement the operations that are performed by the first access network device in the method.

Specifically, the transceiver unit 1100 is configured to send the first request message to the terminal device, where the first request message is used to request the terminal device to report the related information of the first cell corresponding to the physical cell identifier PCI. The transceiver unit 1100 is further configured to receive the related information that is of the first cell and that is sent by the terminal device, where the related information of the first cell includes the subcarrier spacing SCS information of the first cell and the bandwidth information of the first cell.

Optionally, the related information of the first cell is obtained by the terminal device by reading the system broadcast message of the first cell.

Optionally, the related information of the first cell includes one or more pieces of the following information: the cell identity of the first cell, the information about whether access to the first cell is allowed, the information about whether the first cell is an NSA cell, the PLMN information of the first cell, the TAC information of the first cell, the boundary information of the first cell, or the information of the bits occupied by the identity of the second access network device in the cell identity of the first cell, where the second access network device is an access network device corresponding to the first cell, and the bit information is used to determine the identity of the second access network device.

Optionally, the boundary information of the first cell includes absolute the frequency information of the reference resource block, or includes the absolute frequency information and the offsettocarrier information of the reference resource block.

Optionally, the processing unit 1200 is configured to determine whether the terminal device can be handed over to the first cell, where the determining is based on one or more pieces of the following information: the information about whether access to the first cell is allowed, the information about whether the first cell is an NSA cell, the bandwidth information of the first cell, and the SCS information of the first cell. If the terminal device can be handed over to the first cell, the transceiver unit 1100 is further configured to send the handover request message to the core network device, where the handover request message is used to request to hand over the terminal device to the first cell, and the handover request message includes the identity of the second access network device.

Optionally, the handover request message further includes the PLMN information of the first cell and/or the TAC information of the first cell.

Optionally, the transceiver unit 1100 is further configured to receive a handover command sent by the core network device. The processing unit 1200 is further configured to send a second handover command to the terminal device based on the first handover command, to hand over the terminal device to the first cell.

Optionally, the SCS information of the first cell corresponds to the bandwidth information of the first cell.

Optionally, the SCS information of the first cell includes one or more pieces of SCS information, and the bandwidth information of the first cell includes one or more pieces of bandwidth information.

It should be understood that a specific process in which the units perform the foregoing corresponding steps is described in detail in the foregoing method embodiment, and for brevity, details are not described herein.

It should be further understood that, when the communications apparatus 1000 is a terminal device, the transceiver unit 1100 in the communications apparatus 1000 may correspond to a transceiver 2020 in a terminal device 2000 shown in FIG. 5, and the processing unit 1200 in the communications apparatus 1000 may correspond to a processor 2010 in the terminal device 2000 shown in FIG. 5.

It should be further understood that, when the communications apparatus 1000 is the chip disposed in the terminal device, the transceiver unit 1200 in the communications apparatus 1000 may be an input/output interface.

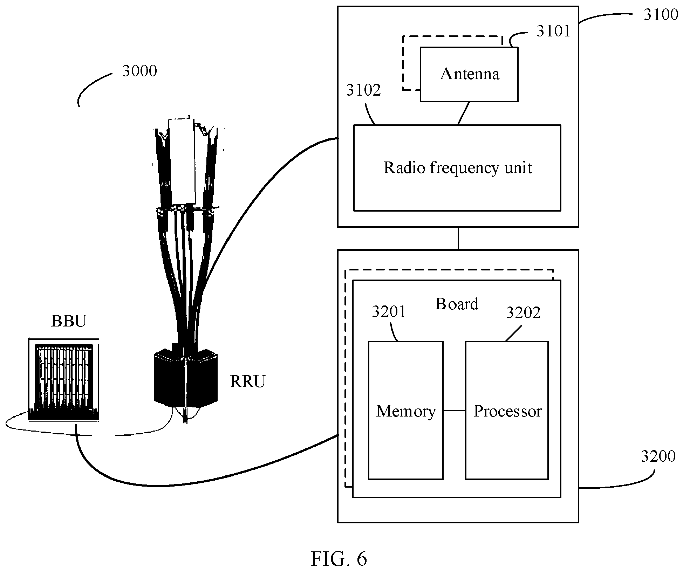

It should be further understood that, when the communications apparatus 1000 is the first access network device, the transceiver unit 1100 in the communications apparatus 1000 may correspond to a transceiver 3200 in a network device 3000 shown in FIG. 6, and the processing unit 1200 in the communications apparatus 1000 may correspond to a processor 3100 in the network device 3000 shown in FIG. 6.

It should be further understood that, when the communications apparatus 1000 is the chip disposed in the first access network device, the transceiver unit 1100 in the communications apparatus 1000 may be an input/output interface.

FIG. 5 is a schematic diagram of a structure of a terminal device 2000 according to an embodiment of this application. The terminal device 2000 may be used in the system shown in FIG. 1, to perform a function of the terminal device in the foregoing method embodiment. As shown in the FIG. 5, the terminal device 2000 includes a processor 2010 and a transceiver 2020. Optionally, the terminal device 2000 further includes a memory 2030. The processor 2010, the transceiver 2002, and the memory 2030 may communicate with each other through an internal connection path, to transfer a control signal or a data signal. The memory 2030 is configured to store a computer program. The processor 2010 is configured to invoke and run the computer program in the memory 2030, to control the transceiver 2020 to receive and send a signal. Optionally, the terminal device 2000 may further include an antenna 2040, configured to send, through a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. In a specific implementation, the memory 2030 may alternatively be integrated into the processor 2010, or may be independent of the processor 2010. The processor 2010 may correspond to the processing unit 1200 in FIG. 4.

The transceiver 2020 may correspond to the transceiver unit 1100 in FIG. 4. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 2000 shown in FIG. 5 can implement processes related to the terminal device in the method 300. Operations or functions of modules in the terminal device 2000 are respectively intended to implement corresponding processes in the foregoing method embodiment. For details, refer to the description in the foregoing method embodiment. To avoid repetition, detailed description is appropriately omitted herein.

The processor 2010 may be configured to perform an action implemented inside the terminal device described in the foregoing method embodiment, and the transceiver 2020 may be configured to perform an action of sending performed by the terminal device to the network device or receiving performed by the terminal device from the network device described in the foregoing method embodiment. For details, refer to the description in the foregoing method embodiment. Details are not described herein again.

Optionally, the terminal device 2000 may further include a power supply 2050, configured to supply power to various devices or circuits in the terminal device.

In addition, to improve functions of the terminal device, the terminal device 2000 may further include one or more of an input unit 2060, a display unit 2070, an audio circuit 2080, a camera lens 2090, a sensor 2100, and the like. The audio circuit may further include a loudspeaker 2082, a microphone 2084, and the like.

FIG. 6 is a schematic diagram of a structure of a network device according to an embodiment of this application, for example, may be a schematic diagram of a structure of a base station. The base station 3000 may be used in the system shown in FIG. 1, to perform a function of the first access network device in the foregoing method embodiment. As shown in the figure, the base station 3000 may include one or more radio frequency units, for example, a remote radio unit (remote radio unit, RRU) 3100, and one or more baseband units (BBUs) (which may also be referred to as distributed units (DUs)) 3200. The RRU 3100 may be referred to as a transceiver unit or a communications unit, and corresponds to the transceiver unit 1100 in FIG. 4. Optionally, the transceiver unit 3100 may also be referred to as a transceiver machine, a transceiver circuit, a transceiver, or the like, and may include at least one antenna 3101 and a radio frequency unit 3102. Optionally, the transceiver unit 3100 may include a receiving unit and a sending unit. The receiving unit may correspond to a receiver (which may also be referred to as a receiver machine or a receiver circuit), and the sending unit may correspond to a transmitter (which may also be referred to as a transmitter machine or a transmitter circuit). The RRU 3100 is mainly configured to receive and send radio frequency signals and perform conversion between a radio frequency signal and a baseband signal. The BBU 3200 is mainly configured to perform baseband processing, control a base station, and the like. The RRU 3100 and the BBU 3200 may be physically disposed together, or may be physically disposed separately, that is, in a distributed base station.

The BBU 3200 is a control center of the base station, may also be referred to as a processing unit, may correspond to the processing unit 1200 in FIG. 4, and is mainly configured to implement a baseband processing function, for example, channel encoding, multiplexing, modulation, or frequency spread. For example, the BBU (processing unit) may be configured to control the base station to perform an operation procedure of the network device in the foregoing method embodiment.

In an example, the BBU 3200 may include one or more boards. A plurality of boards may jointly support a radio access network (for example, an LTE network) having a single access standard, or may separately support radio access networks (for example, an LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action. For example, the processor 3202 is configured to control the base station to perform the operation procedure related to the first access network device in the foregoing method embodiment. The memory 3201 and the processor 3202 may serve one or more boards. In other words, a memory and a processor may be independently disposed on each board. Alternatively, the plurality of boards may share a same memory and a same processor. In addition, a necessary circuit may further be disposed on each board.

It should be understood that the base station 3000 shown in FIG. 6 can implement processes related to the first access network device in the foregoing method embodiment. Operations or functions of modules in the base station 3000 are respectively intended to implement corresponding procedures in the foregoing method embodiment. For details, refer to the description in the foregoing method embodiment. To avoid repetition, detailed description is appropriately omitted herein.

The BBU 3200 may be configured to perform an action implemented inside the first access network device described in the foregoing method embodiment, and the RRU 3100 may be configured to perform an action of sending performed by the first access network device to the terminal device or receiving performed by the first access network device from the terminal device described in the foregoing method embodiment. For details, refer to the description in the foregoing method embodiment. Details are not described herein again.

According to the method provided in embodiments of this application, this application further provides a computer program product. The computer program product includes computer program code. When the computer program code is run on a computer, the computer is enabled to perform the method implemented on the side of the terminal device or the first access network device in the foregoing method embodiment.

According to the method provided in embodiments of this application, this application further provides a computer-readable medium. The computer-readable medium stores program code. When the program code is run on a computer, the computer is enabled to perform the method implemented on the side of the terminal device or the first access network device in the foregoing method embodiment.

According to the method provided in embodiments of this application, this application further provides a system, including the foregoing first access network device, the second access network device, and the core network device. Optionally, the system may further include the foregoing terminal device.

An embodiment of this application further provides a processing apparatus, including a processor and an interface. The processor is configured to perform the method in the foregoing method embodiment.

It should be understood that, the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD) or another integrated chip. The processing apparatus may implement or perform the method, the steps, and the logical block diagrams that are disclosed in embodiments of this application. The general-purpose processor may be a microprocessor, or the processor may be any conventional processor or the like. The steps of the method disclosed with reference to embodiments of this application may be directly presented as being performed and completed by a hardware decoding processor, or performed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that, in embodiments of this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that memories in the system and method described in this specification include but are not limited to these memories and memories of any other appropriate types.

All or some of the foregoing embodiments may be implemented through software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state disc, SSD)), or the like.

The network device and the terminal device in the foregoing apparatus embodiments completely correspond to the network device or the terminal device in the method embodiment. A corresponding module or unit performs a corresponding step. For example, a communications unit (a transceiver) performs a receiving or a sending step in the method embodiment, and a processing unit (a processor) performs another step other than the sending or the receiving step. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that is run on a processor, the processor, an object, an executable file, a thread of execution, a program, or a computer. As shown in the figures, both a computing device and an application that runs on the computing device may be components. One or more components may reside within a process or a thread of execution, and a component may be located on one computer or distributed between two or more computers. In addition, these components may be executed from various computer-readable media that store various data structures. The components may communicate by using a local or remote process, for example, based on a signal having one or more data packets (for example, data from two components interacting with another component in a local system, a distributed system, or across a network such as the internet interacting with another system by using the signal).

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, numbers "first", "second", and the like are merely used to distinguish between different objects, for example, to distinguish between different network devices, and do not constitute a limitation on the scope of embodiments of this application. Embodiments of this application are not limited thereto.

It should be further understood that, in this application, "when" and "if" mean that a network element performs corresponding processing in an objective situation, and are not intended to limit time, and the network element is not necessarily required to have a determining action during implementation, and do not mean any other limitation.

It should be further understood that in this application, "at least one" refers to one or more, and "a plurality of" refers to two or more.

It should be further understood that in embodiments of this application, "B corresponding to A" indicates that B is associated with A, and B may be determined based on A. However, it should be further understood that determining B according to A does not mean that B is determined only according to A, and B may be alternatively determined according to A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application are necessarily to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiment, and details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing description is merely specific implementations of this application, but the protection scope of this application is not limited thereto. Therefore, the protection scope of this application shall be subject to the protection scope of the claims.

## Claims

1. A communication method, comprising:
receiving (S310), by a terminal device, a first request message sent by a first access network device, wherein the first request message is used to request the terminal device to report related information of a first cell corresponding to a physical cell identifier, PCI;
obtaining (S320), by the terminal device, the related information of the first cell based on the first request message, wherein the related information of the first cell comprises subcarrier spacing, SCS, information of the first cell and bandwidth information of the first cell; and
sending (S330), by the terminal device, the related information of the first cell to the first access network device.

2. The method according to claim 1, wherein the obtaining (S320), by the terminal device, the related information of the first cell based on the first request message comprises:
reading, by the terminal device, a system broadcast message of the first cell based on the first request message, wherein the system broadcast message comprises the related information of the first cell.

3. The method according to claim 2, wherein before the reading, by the terminal device, a system broadcast message of the first cell based on the first request message, the method further comprises:
sending, by the terminal device, a second request message to a second access network device based on the first request message, wherein the second access network device is an access network device corresponding to the first cell, and the second request message is used to request the second access network device to send the system broadcast message.

4. The method according to any one of claims 1 to 3, wherein the related information of the first cell further comprises one or more of the following:
a cell identity of the first cell, information about whether access to the first cell is allowed, information about whether the first cell is a non-access stratum, NAS, cell, public land mobile network, PLMN, information of the first cell, tracking area code, TAC, information of the first cell, boundary information of the first cell, or information of bits occupied by an identity of the second access network device in the cell identity of the first cell, wherein
the second access network device is the access network device corresponding to the first cell, and the bit information is used to determine the identity of the second access network device.

5. The method according to claim 4, wherein the boundary information of the first cell comprises absolute frequency information of a reference resource block, or comprises the absolute frequency information and offsettocarrier information of the reference resource block.

6. The method according to any one of claims 1 to 5, wherein the SCS information of the first cell corresponds to the bandwidth information of the first cell.

7. The method according to any one of claims 1 to 6, wherein the SCS information of the first cell comprises one or more pieces of SCS information, and the bandwidth information of the first cell comprises one or more pieces of bandwidth information.

8. The method according to any one of claims 1 to 7, wherein before the receiving, by a terminal device, a first request message sent by a first access network device, the method further comprises:
sending, by the terminal device, the PCI to the first access network device.

9. A communication method, comprising:
sending (S310), by a first access network device, a first request message to a terminal device, wherein the first request message is used to request the terminal device to report related information of a first cell corresponding to a physical cell identifier, PCI; and
receiving (S330), by the first access network device, the related information of the first cell sent by the terminal device, wherein the related information of the first cell comprises subcarrier spacing, SCS, information of the first cell and bandwidth information of the first cell.

10. The method according to claim 9, wherein the related information of the first cell is obtained by the terminal device by reading a system broadcast message of the first cell.

11. The method according to claim 9 or 10, wherein the related information of the first cell comprises one or more of the following:
a cell identity of the first cell, information about whether access to the first cell is allowed, information about whether the first cell is a non-access stratum, NSA, cell, public land mobile network, PLMN, information of the first cell, tracking area code, TAC, information of the first cell, boundary information of the first cell, or information of bits occupied by an identity of a second access network device in the cell identity of the first cell, wherein
the second access network device is an access network device corresponding to the first cell, and the bit information is used to determine the identity of the second access network device.

12. The method according to claim 11, wherein the boundary information of the first cell comprises absolute frequency information of a reference resource block, or comprises the absolute frequency information and offsettocarrier information of the reference resource block.

13. The method according to claim 11 or 12, wherein the method further comprises:
determining (S340), by the first access network device, whether the terminal device can be handed over to the first cell, wherein the determining is based on one or more pieces of the following information: the information about whether access to the first cell is allowed, the information about whether the first cell is an NSA cell, the bandwidth information of the first cell, and the SCS information of the first cell; and
if the terminal device can be handed over to the first cell, sending, by the first access network device, a handover request message to a core network device, wherein the handover request message is used to request to hand over the terminal device to the first cell, and the handover request message comprises the identity of the second access network device.

14. The method according to claim 13, wherein the handover request message further comprises the PLMN information of the first cell and/or the TAC information of the first cell.

15. A terminal device, comprising units for carrying out steps of the method according to any one of claims 1 to 8.

16. A first access network device, comprising units for carrying out steps of the method according to any one of claims 9 to 14.

## Patentansprüche

1. Kommunikationsverfahren, das umfasst:
Empfangen (S310), durch eine Endgerätevorrichtung, einer ersten Anforderungsnachricht, die durch eine erste Zugangsnetzwerkvorrichtung gesendet wird, wobei die erste Anforderungsnachricht verwendet wird, um anzufordern, dass die Endgerätevorrichtung zugehörige Informationen einer ersten Zelle, die einer physischen Zellkennung, PCI, entsprechen, meldet;
Erhalten (S320), durch die Endgerätevorrichtung, der zugehörigen Informationen der ersten Zelle basierend auf der ersten Anforderungsnachricht, wobei die zugehörigen Informationen der ersten Zelle Hilfsträgerabstands(SCS)-Informationen der ersten Zelle und Bandbreiteninformationen der ersten Zelle umfassen; und
Senden (S330), durch die Endgerätevorrichtung, der zugehörigen Informationen der ersten Zelle an die erste Zugangsnetzwerkvorrichtung.

2. Verfahren nach Anspruch 1, wobei das Erhalten (S320), durch die Endgerätevorrichtung, der zugehörigen Informationen der ersten Zelle basierend auf der ersten Anforderungsnachricht umfasst:
Lesen, durch die Endgerätevorrichtung, einer Systemrundsendungsnachricht der ersten Zelle basierend auf der ersten Anforderungsnachricht, wobei die Systemrundsendungsnachricht die zugehörigen Informationen der ersten Zelle umfasst.

3. Verfahren nach Anspruch 2, wobei, vor dem Lesen, durch die Endgerätevorrichtung, einer Systemrundsendungsnachricht der ersten Zelle basierend auf der ersten Anforderungsnachricht, das Verfahren ferner umfasst:
Senden, durch die Endgerätevorrichtung, einer zweiten Anforderungsnachricht an eine zweite Zugangsnetzwerkvorrichtung basierend auf der ersten Anforderungsnachricht, wobei die zweite Zugangsnetzwerkvorrichtung eine Zugangsnetzwerkvorrichtung, die der ersten Zelle entspricht, ist, und die zweite Anforderungsnachricht verwendet wird, um anzufordern, dass die zweite Zugangsnetzwerkvorrichtung die Systemrundsendungsnachricht sendet.

4. Verfahren nach einem der Ansprüche 1 bis 3, wobei die zugehörigen Informationen der ersten Zelle ferner eines oder mehrere der Folgenden umfassen:
einer Zellidentität der ersten Zelle, Informationen darüber, ob ein Zugang auf die erste Zelle erlaubt ist, Informationen darüber, ob die erste Zelle eine Nicht-Zugangsschicht(NAS)-Zelle ist, Mobilfunknetz(PLMN)-Informationen der ersten Zelle, Verfolgungsbereichscode(TAC)-Informationen der ersten Zelle, Grenzinformationen der ersten Zelle oder Informationen von Bits, die durch eine Identität der zweiten Zugangsnetzwerkvorrichtung in der Zellidentität der ersten Zelle belegt sind, wobei die zweite Zugangsnetzwerkvorrichtung die Zugangsnetzwerkvorrichtung, die der ersten Zelle entspricht, ist, und die Bitinformationen verwendet werden, um die Identität der zweiten Zugangsnetzwerkvorrichtung zu bestimmen.

5. Verfahren nach Anspruch 4, wobei die Grenzinformationen der ersten Zelle absolute Frequenzinformationen eines Referenzressourcenblocks umfassen oder die absoluten Frequenzinformationen und Offsettocarrier-Informationen des Referenzressourcenblocks umfassen.

6. Verfahren nach einem der Ansprüche 1 bis 5, wobei die SCS-Informationen der ersten Zelle den Bandbreiteninformationen der ersten Zelle entsprechen.

7. Verfahren nach einem der Ansprüche 1 bis 6, wobei die SCS-Informationen der ersten Zelle ein oder mehrere Teile von SCS-Informationen umfassen und die Bandbreiteninformationen der ersten Zelle ein oder mehrere Teile von Bandbreiteninformationen umfassen.

8. Verfahren nach einem der Ansprüche 1 bis 7, wobei, vor dem Empfangen, durch eine Endgerätevorrichtung, einer ersten Anforderungsnachricht, die durch eine erste Netzwerkvorrichtung gesendet wird, das Verfahren ferner umfasst:
Senden, durch die Endgerätevorrichtung, der PCI an die erste Zugangsnetzwerkvorrichtung.

9. Kommunikationsverfahren, das umfasst:
Senden (S310), durch eine erste Zugangsnetzwerkvorrichtung, einer ersten Anforderungsnachricht an eine Endgerätevorrichtung, wobei die erste Anforderungsnachricht verwendet wird, um anzufordern, dass die Endgerätevorrichtung zugehörige Informationen einer ersten Zelle, die einer physischen Zellkennung, PCI, entsprechen, meldet; und
Empfangen (S330), durch die erste Zugangsnetzwerkvorrichtung, der zugehörigen Informationen der ersten Zelle, die durch die Endgerätevorrichtung gesendet werden, wobei die zugehörigen Informationen der ersten Zelle Hilfsträgerabstands(SCS)-Informationen der ersten Zelle und Bandbreiteninformationen der ersten Zelle umfassen.

10. Verfahren nach Anspruch 9, wobei die zugehörigen Informationen der ersten Zelle durch die Endgerätevorrichtung durch Lesen einer Systemrundsendungsnachricht der ersten Zelle erhalten werden.

11. Verfahren nach Anspruch 9 oder 10, wobei die zugehörigen Informationen der ersten Zelle eines oder mehrere der Folgenden umfassen:
einer Zellidentität der ersten Zelle, Informationen darüber, ob der Zugang auf die erste Zelle erlaubt ist, Informationen darüber, ob die erste Zelle eine Nicht-Zugangsschicht(NSA)-Zelle ist, Mobilfunknetz(PLMN)-Informationen der ersten Zelle, Verfolgungsbereichscode(TAC)-Informationen der ersten Zelle, Grenzinformationen der ersten Zelle oder Informationen von Bits, die durch eine Identität einer zweiten Zugangsnetzwerkvorrichtung in der Zellidentität der ersten Zelle belegt sind, wobei die zweite Zugangsnetzwerkvorrichtung eine Zugangsnetzwerkvorrichtung, die der ersten Zelle entspricht, ist, und die Bitinformationen verwendet werden, um die Identität der zweiten Zugangsnetzwerkvorrichtung zu bestimmen.

12. Verfahren nach Anspruch 11, wobei die Grenzinformationen der ersten Zelle absolute Frequenzinformationen eines Referenzressourcenblocks umfassen oder die absoluten Frequenzinformationen und Offsettocarrier-Informationen des Referenzressourcenblocks umfassen.

13. Verfahren nach Anspruch 11 oder 12, wobei das Verfahren ferner umfasst:
Bestimmen (S340), durch die erste Zugangsnetzwerkvorrichtung, ob die Endgerätevorrichtung an die erste Zelle übergeben werden kann, wobei das Bestimmen auf einem oder mehreren Teilen der folgenden Informationen basiert: der Information darüber, ob der Zugang auf die erste Zelle erlaubt ist, der Information darüber, ob die erste Zelle eine NSA-Zelle ist, der Bandbreiteninformation der ersten Zelle und der SCS-Information der ersten Zelle; und
falls die Endgerätevorrichtung an die erste Zelle übergeben werden kann, Senden, durch die erste Zugangsnetzwerkvorrichtung, einer Übergabeanforderungsnachricht an eine Kernnetzwerkvorrichtung, wobei die Übergabeanforderungsnachricht verwendet wird, um anzufordern, dass die Endgerätevorrichtung an die erste Zelle übergeben wird, und die Übergabeanforderungsnachricht die Identität der zweiten Zugangsnetzwerkvorrichtung umfasst.

14. Verfahren nach Anspruch 13, wobei die Übergabeanforderungsnachricht ferner die PLMN-Informationen der ersten Zelle und/oder die TAC-Informationen der ersten Zelle umfasst.

15. Endgerätevorrichtung, die Einheiten zum Ausführen von Schritten des Verfahrens nach einem der Ansprüche 1 bis 8 umfasst.

16. Erste Zugangsnetzwerkvorrichtung, die Einheiten zum Ausführen von Schritten des Verfahrens nach einem der Ansprüche 9 bis 14 umfasst.

## Revendications

1. Procédé de communication, comprenant :
la réception (S310), par un dispositif terminal, d'un premier message de demande envoyé par un premier dispositif de réseau d'accès, dans lequel le premier message de demande est utilisé pour demander au dispositif terminal de rapporter des informations relatives à une première cellule correspondant à un identifiant de cellule physique, PCI ;
l'obtention (S320), par le dispositif terminal, des informations relatives à la première cellule sur la base du premier message de demande, dans lequel les informations relatives à la première cellule comprennent des informations sur l'espacement des sous-porteuses, SCS, de la première cellule et des informations sur la largeur de bande de la première cellule ; et
l'envoi (S330), par le dispositif terminal, des informations relatives à la première cellule au premier dispositif de réseau d'accès.

2. Procédé selon la revendication 1, dans lequel l'obtention (S320), par le dispositif terminal, des informations relatives à la première cellule sur la base du message de demande comprend :
la lecture, par le dispositif terminal, d'un message de diffusion du système de la première cellule sur la base du premier message de demande, dans lequel le message de diffusion du système comprend les informations relatives à la première cellule.

3. Procédé selon la revendication 2, dans lequel, avant la lecture, par le dispositif terminal, d'un message de diffusion du système de la première cellule sur la base du premier message de demande, le procédé comprend en outre :
l'envoi, par le dispositif terminal, d'un second message de demande à un second dispositif de réseau d'accès sur la base du premier message de demande, dans lequel le second dispositif de réseau d'accès est un dispositif de réseau d'accès correspondant à la première cellule, et le second message de demande est utilisé pour demander au second dispositif de réseau d'accès d'envoyer le message de diffusion du système.

4. Procédé selon l'une quelconque des revendications 1 à 3, dans lequel les informations relatives à la première cellule comprennent en outre un ou plusieurs parmi :
une identité de cellule de la première cellule, des informations indiquant si l'accès à la première cellule est autorisé, des informations indiquant si la première cellule est une cellule de strate de non-accès, NAS, des informations sur un réseau mobile terrestre public, PLMN, de la première cellule, des informations sur un code de zone de suivi, TAC, de la première cellule, des informations sur la limite de la première cellule, ou des informations sur les bits occupés par une identité du second dispositif de réseau d'accès dans l'identité de cellule de la première cellule, dans lequel le second dispositif de réseau d'accès est le dispositif de réseau d'accès correspondant à la première cellule, et les informations de bit sont utilisées pour déterminer l'identité du second dispositif de réseau d'accès.

5. Procédé selon la revendication 4, dans lequel les informations sur la limite de la première cellule comprennent des informations sur la fréquence absolue d'un bloc de ressources de référence, ou comprennent les informations sur la fréquence absolue et les informations sur le décalage par rapport à la porteuse du bloc de ressources de référence.

6. Procédé selon l'une quelconque des revendications 1 à 5, dans lequel les informations SCS de la première cellule correspondent aux informations sur la largeur de bande de la première cellule.

7. Procédé selon l'une quelconque des revendications 1 à 6, dans lequel les informations sur le SCS de la première cellule comprennent un ou plusieurs éléments d'informations sur le SCS, et les informations sur la largeur de bande de la première cellule comprennent un ou plusieurs éléments d'informations sur la largeur de bande.

8. Procédé selon l'une quelconque des revendications 1 à 7, dans lequel avant la réception, par un dispositif terminal, d'un premier message de demande envoyé par un premier dispositif de réseau d'accès, le procédé comprend en outre :
l'envoi, par le dispositif terminal, du PCI au premier dispositif de réseau d'accès.

9. Procédé de communication, comprenant :
l'envoi (S310), par un premier dispositif de réseau d'accès, d'un premier message de demande à un dispositif terminal, dans lequel le premier message de demande est utilisé pour demander au dispositif terminal de rapporter des informations relatives à une première cellule correspondant à un identifiant de cellule physique, PCI ; et
la réception (S330), par le premier dispositif de réseau d'accès, des informations relatives à la première cellule envoyées par le dispositif terminal, dans lequel les informations relatives à la première cellule comprennent des informations sur l'espacement des sous-porteuses, SCS, de la première cellule et des informations sur la largeur de bande de la première cellule.

10. Procédé selon la revendication 9, dans lequel les informations relatives à la première cellule sont obtenues par le dispositif terminal en lisant un message de diffusion du système de la première cellule.

11. Procédé selon la revendication 9 ou 10, dans lequel les premières informations relatives à la première cellule comprennent un ou plusieurs parmi :
une identité de cellule de la première cellule, des informations indiquant si l'accès à la première cellule est autorisé, des informations indiquant si la première cellule est une cellule de strate de non-accès, NSA, des informations sur le réseau mobile terrestre public, PLMN, de la première cellule, des informations sur le code de zone de suivi, TAC, de la première cellule, des informations sur la limite de la première cellule, ou des informations sur les bits occupés par une identité d'un second dispositif de réseau d'accès dans l'identité de cellule de la première cellule, dans lequel le second dispositif de réseau d'accès est un dispositif de réseau d'accès correspondant à la première cellule, et les informations de bit sont utilisées pour déterminer l'identité du second dispositif de réseau d'accès.

12. Procédé selon la revendication 11, dans lequel les informations sur la limite de la première cellule comprennent des informations sur la fréquence absolue d'un bloc de ressources de référence, ou comprennent les informations sur la fréquence absolue et les informations sur le décalage par rapport à la porteuse du bloc de ressources de référence.

13. Procédé selon la revendication 11 ou 12, dans lequel le procédé comprend en outre :
le fait de déterminer (S340), par le premier dispositif de réseau d'accès, si le dispositif terminal peut être transféré à la première cellule, dans lequel la détermination est basée sur un ou plusieurs éléments des informations suivantes : les informations indiquant si l'accès à la première cellule est autorisé, les informations indiquant si la première cellule est une cellule NSA, les informations sur la largeur de bande de la première cellule et les informations sur le SCS de la première cellule ; et
si le dispositif terminal peut être transféré à la première cellule, l'envoi, par le premier dispositif de réseau d'accès, d'un message de demande de transfert à un dispositif de réseau central, dans lequel le message de demande de transfert est utilisé pour demander le transfert du dispositif terminal à la première cellule, et le message de demande de transfert comprend l'identité du second dispositif de réseau d'accès.

14. Procédé selon la revendication 13, dans lequel le message de demande de transfert comprend en outre les informations sur le PLMN de la première cellule et/ou les informations sur le TAC de la première cellule.

15. Dispositif terminal, comprenant des unités destinées à mettre en oeuvre les étapes du procédé selon l'une quelconque des revendications 1 à 8.

16. Premier dispositif de réseau d'accès, comprenant des unités destinées à mettre en oeuvre les étapes du procédé selon l'une quelconque des revendications 9 à 14.
